# EUROPEAN PATENT APPLICATION

(11) **EP 1 991 015 A1**
(43) Date of publication of application: **12.11.2008**
(21) Application number: 07008017.1
(22) Date of filing: 19.04.2007
(51) Int. Cl.: H04Q 7/34, H04Q 7/38

(54) **A method for signalling a call to a terminating mobile station in a mobile communication network comprising a MSC pool**

(71) Applicant: Nokia Siemens Networks Oy, 02610 Espoo (FI)
(72) Inventor: Eckerle, Wolfgang, 70825 Korntal-Münchcingen (DE)
(74) Representative: Schober, Ralf Stefan

(57) **Abstract**

The invention relates to a method for signalling a call to a terminating mobile station (MS) in a mobile communication network, wherein a mobile switching center (MSC0) assigned to the terminating mobile station (MS) is out of service and substituted by a standby mobile switching center (MSC1) which belongs to a pool of mobile switching centers, the method comprising the steps of:a) a home location register (HLR) comprising subscriber data of the terminating mobile station (MS) is contacted by an originating node (MS')of the call via a gateway mobile switching center (MSC') and a request for providing a roaming number identifying the mobile switching center (MSC0) assigned to the terminating mobile station (MS) is sent to the standby mobile switching center (MSC1); b) upon receipt of the request for providing a roaming number, the standby mobile switching center (MSC1) transmits a paging request for paging the terminating mobile station (MS); c) the terminating mobile station (MS) transmits a paging response which is routed to a random mobile switching center (MSC2) out of the pool of mobile switching centers; d) the random mobile switching center (MSC2) sends a roaming number (MSRN) identifying the random mobile switching center (MSC2) to the standby mobile switching center (MSC1); e) the standby mobile switching center (MSC1) sends the roaming number (MSRN) identifying the random mobile switching center (MSC2) to the home location register (HLR) which sends the roaming number (MSRN) to the gateway mobile switching center (MSC'); f) the random mobile switching center (MSC2) is assigned to the terminating mobile station (MS); g) by using the roaming number (MSRN) identifying the random mobile switching center (MSC2), a call is established towards the terminating mobile station (MS).

## Description

The invention relates to a method for signalling a call to a terminating mobile station in a mobile communication network as well as to a mobile communication network wherein such method can be performed.

Mobile communication networks, particularly UMTS and GSM mobile networks, comprise a plurality of mobile switching centers which are network nodes providing call handling and mobility management functions. Mobile communication networks further include so-called home location registers wherein the subscriber data record of the subscribers in the communication network are stored permanently. Furthermore, a so-called visitor location register is assigned to each mobile switching center in the network. In the visitor location registers, the subscriber record plus data of the mobile subscribers being located in the area managed by the corresponding mobile switching center are stored temporarily, i.e. as long the mobile station of the subscriber is registered in this mobile switching center.

In order to provide the operability of the network in case that a mobile switching center is out of service, the concept of geographical redundancy may be used. According to this concept, a plurality of mobile switching centers form a pool wherein all Base Station Controllers and/or Radio Network Controllers in the radio access network have a link to each mobile switching center in the pool. In case that one mobile switching center goes down, the function of this outage mobile switching center is assumed by another mobile switching center in the pool. In case of a mobile originated call from a mobile station associated with the mobile subscriber, the concept of geographical redundancy works well because the originating mobile station (i.e. the mobile station where the call is initiated) originally being assigned to an outage mobile switching center will be registered in another mobile switching center in the pool of mobile switching centers and the call signalling will be performed after this registration as usual. However, up to now there does not exist a concept to enable the call signalling of a mobile terminated call wherein the mobile switching center assigned to a terminating mobile station (i.e. the mobile station where the call terminates) goes out of service.

Therefore, it is an object of the invention to provide a method for signalling a call to the terminating mobile station in a mobile communication network, wherein a mobile switching center assigned to the terminating mobile station is out of service.

In the method according to the invention, the outage mobile switching center assigned to the terminating mobile station is substituted by a standby mobile switching center which belongs to a pool of mobile switching centers. This pool of mobile switching centers is preferably the afore-mentioned pool providing geographical redundancy in case of a breakdown of one mobile switching center. The method according to the invention comprises the following steps:

In a step a), a home location register which is a well-known component in mobile communication networks and comprises subscriber data of the terminating mobile station is contacted by an originating node of the call via a gateway mobile switching center. The gateway mobile switching center is preferably a mobile switching center being accessed from the mobile switching center assigned to the originating node of the call. The gateway switching center may also coincide with the mobile switching center assigned to the originating node of the call in case that the originating node and the terminating mobile station are located in the same mobile network. After contacting the home location register, a request for providing a roaming number identifying the mobile switching center assigned to the terminating mobile station is sent to the standby mobile switching center. The roaming number is preferably a temporary number allocated to the terminating mobile station wherein the number includes the address of the mobile switching center assigned to the terminating mobile station. The concept of providing a roaming number is well-known in the art and will therefore not be described in detail.

In a next step b), upon receipt of the request for providing a roaming number, the standby mobile switching center transmits a paging request for paging the terminating mobile station. Thereafter, in step c), the terminating mobile station sends a corresponding paging response back. However, the mobile switching center assigned to the terminating mobile station is out of order and cannot be reached. Therefore, the paging response will be routed to a random mobile switching center out of the pool of mobile switching centers by the use of a routing function. This routing function is preferably performed by a base station controller/radio network controller being responsible for the terminating mobile station.

In a step d), the random mobile switching center receiving the paging response will send a roaming number to the standby mobile switching center. This roaming number enables the identification of the random mobile switching center and it is preferably allocated by the random mobile switching center.

In a step e), the standby mobile switching center receiving the roaming number sends this number to the home location register and from there the roaming number is transmitted to the gateway mobile switching center. Furthermore, before, simultaneously with or after step e), the random mobile switching center is assigned to the terminating mobile station with the consequence that the random mobile switching center is now the switching center responsible for the terminating mobile station. As the roaming number identifies the random mobile switching center, it is now possible to establish the call towards the terminating mobile station by using this roaming number in step g).

According to the method of the invention, a call can be signalled towards a mobile station belonging to a mobile switching center out of service. This is possible because the invention provides a mechanism to redirect and establish a termination call to each mobile switching center inside a pool from the gateway mobile switching center independent where the above-mentioned routing function will route the paging response and with this the call.

In a preferred embodiment, the request for providing a roaming number in step a) is sent to the standby mobile switching center via a route substituting a link between the home location register and the mobile switching center out of service. This substituted route is preferably a secondary SCCP route (SCCP = Signalling Connection Control Part) in the SS7 protocol (SS7 - Signalling System #7). The SS7 protocol as well as the establishment of a SCCP route are well-known to a person skilled in the art.

In another embodiment of the invention, a temporary identity of the terminating mobile station is read in step b) from a database storing backup data from the mobile switching center out of service and being located in or assigned to the standby mobile switching center, the temporary identity being used for paging the terminating mobile station. Preferably, each mobile switching center of the pool of mobile switching centers includes such a database, wherein the database of a respective mobile switching center comprises information of all mobile stations managed by another mobile switching center than the respective mobile switching center within the pool, particularly the information about the temporary identity of each mobile station managed by said another mobile switching center, wherein said another mobile switching center is a mobile switching center being substituted by the respective mobile switching center in case of an outage of said another mobile switching center. Due to the use of such a database, a paging request addressing the terminating mobile station can be transmitted/broadcasted from the standby mobile switching center though this mobile switching center is not the mobile switching center originally assigned to the terminating mobile station being paged.

In another embodiment of the invention, the temporary identity includes a temporary mobile subscriber identity well-known under the name TMSI which is assigned to the terminating mobile station by a visitor location register of the mobile switching center out of service. The TMSI includes an address indicator of the mobile switching center, where the mobile station is registered. This is the so-called network resource indication NRI. Preferably, a location area code is assigned to the temporary identity and is stored in said database, said location area code indicating the location of the terminating mobile station within a radio access network of the mobile communication network. Due to this feature, the paging can be directed specifically to the area where the mobile station resides.

In another preferred embodiment of the invention, the paging response sent in step c) to the random mobile switching center also includes the temporary identity of the terminating mobile station, and the random mobile switching center retrieves from this temporary identity an identifier for the mobile switching center out of service, particularly the address of a visitor location register of the mobile switching center out of service. As a consequence, by using this identifier, the roaming number identifying the random mobile switching center is sent in step d) to the standby mobile switching center. This is enabled due to a route substituting a link between the random mobile switching center and the mobile switching center out of service, particularly via a secondary SCCP route in the SS7 protocol. This route is used because the mobile switching center identified by the aforementioned identifier is not reachable as it is out of service. Therefore, the corresponding substituting route going towards the standby mobile switching center is used automatically.

As there does not exist a standardized message for transmitting the afore-mentioned roaming number in step d) from the random mobile switching center to the standby mobile switching center, the roaming number identifying the random mobile switching center is sent to the standby mobile switching center within an extension container in an identification message, particularly in the MAP_SEND_IDENTIFICATION_REQUEST message of the well-known MAP protocol (MAP = Mobile Application Protocol).

In another embodiment of the invention, upon receipt of the roaming number identifying the random mobile switching center on the standby mobile switching center, a permanent identity of the terminating mobile station is sent in step d) to the random mobile switching center. This permanent identity is preferably the international mobile subscriber identity known as IMSI. This IMSI will be used in step f) in order to perform the assignment of the random mobile switching center to the terminating mobile station. In order to enable the transmission of the permanent identity of the terminating mobile station from the standby to the random mobile switching center, this permanent identity is preferably stored in the above-mentioned database in or assigned to the standby mobile switching center.

In another embodiment of the invention, step f) includes the well-known steps of a security vector retrieval and a location update being performed between the home location register and the random mobile switching center.

The aforementioned method can be used in an arbitrary mobile communication network, but is preferably performed in a UMTS and/or GSM network.

Besides the above-described method, the invention also refers to a mobile communication network, wherein a mobile switching center assigned to a terminating mobile station is out of service and substituted by a standby mobile switching center which belongs to a pool a mobile switching centers, the communication network being designed for signalling a call to a terminating mobile station by performing the following steps:
a) a home location register comprising subscriber data of the terminating mobile station is contacted by an originating node of the call via a gateway switching center and a request for providing a roaming number identifying the mobile switching center assigned to the terminating mobile station is sent to the standby mobile switching center;
b) upon receipt of the request for providing a roaming number, the standby mobile switching center transmits a paging request for paging the terminating mobile station;
c) the terminating mobile station transmits a paging response which is routed to a random mobile switching center out of the pool of mobile switching centers, wherein this routing function is preferably performed by a base station controller/radio network controller being responsible for the terminating mobile station;
d) the random mobile switching center sends a roaming number identifying the random mobile switching center to the standby mobile switching center;
e) the standby mobile switching center sends the roaming number identifying the random mobile switching center to the home location register which sends the roaming number to the gateway mobile switching center;
f) the random mobile switching center is assigned to the terminating mobile station;
g) by using the roaming number identifying the random mobile switching center, a call is established towards the terminating mobile station.

This network is preferably designed for performing any of the above mentioned embodiments of the method according to the invention.

Embodiments of the invention are described in the following with respect to the accompanying drawings, wherein:
- Fig. 1: shows a schematic view of a communication network wherein an embodiment of the method according to the invention is performed; and
- Fig. 2: shows a call flow specifying the messages exchanged in an embodiment of the invention.

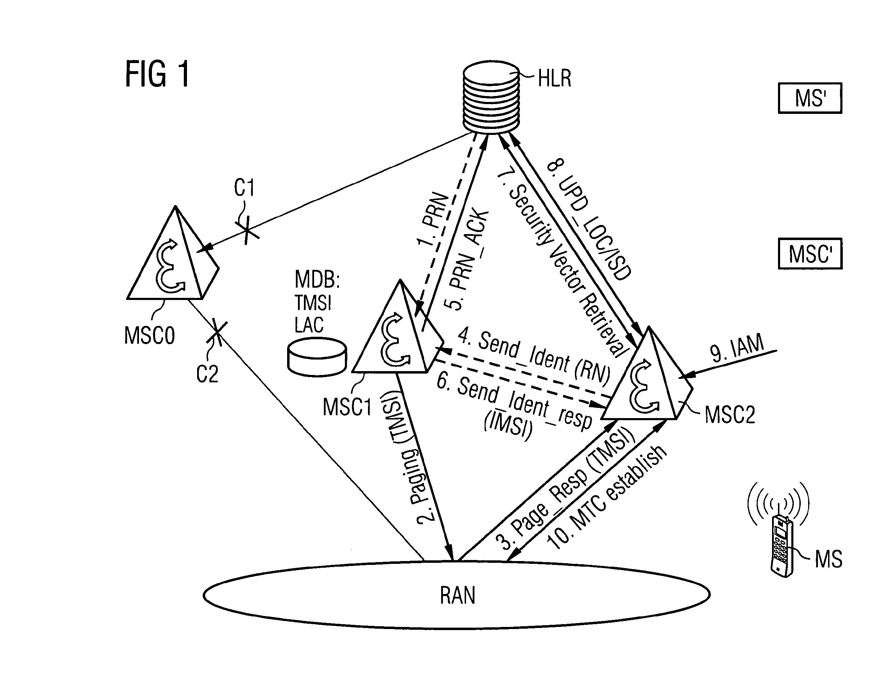

Fig. 1 shows a schematic view of a mobile communication network in the form of a UMTS network. Instead of an UMTS network, any other mobile network may be used, particularly a GSM network. The network comprises the radio access network RAN including a plurality of radio network controllers RNC (not shown in Fig. 1). In Fig. 1, one mobile station MS is shown which functions as the terminating mobile station as defined in claim 1, and a call towards this mobile station from an originating node MS' (which may be any terminal, e.g. a mobile phone a fixed network telephone) is to be established as will be described in the following. The radio access network RAN is connected to a core network comprising in the embodiment shown in Fig. 1 a plurality of mobile switching centers MSC0, MSC1, MSC2, MSC' which are common components in mobile communication networks.

For signalling a call in Fig. 1, the originating node MS' tries to contact the terminating mobile station MS via a gateway mobile switching center MSC'. The gateway mobile switching center MSC' contacts the home location register HLR of the terminating mobile station MS. The HLR register manages the subscriber data of the mobile station MS. It includes the international mobile subscriber identity IMSI associated with the mobile station as well as information about the address of a visitor location register VLR (not shown) currently assigned to the mobile station MS. The address of the VLR is notified to the HLR register by a so-called inter-MSC location update. The components HLR and VLR are well-known components in mobile communication networks and, thus, will not be described in detail.

In Fig. 1, the mobile switching centers MSC0, MSC1 and MSC2 form a pool providing geographical redundancy in case of an outage of one of the mobile switching centers. Consequently, when one mobile switching center goes out of service, the mobile originating traffic will be rerouted by a radio network controller (in case of GSM by a base station controller) to another mobile switching center in the pool and a re-registration of the corresponding subscriber will be performed.

In the scenario of Fig. 1, the mobile switching center MSC0 goes out of service, i.e. there no longer exists a link from the MSC0 to the HLR and to the radio access network RAN, as indicated by the crosses C1 and C2. In Fig. 1, all SS7 links substituting links not being existent due to the outage of MSC0 are indicated by broken lines. The mobile switching center MSC0 was the mobile switching center responsible for the mobile station MS. Due to the geographical redundancy feature, all requests of the HLR to the outage MSC will be rerouted via a secondary SCCP route autonomously by the SS7 subsystem to the mobile switching center MSC1 (standby MSC).

As mentioned above, for signalling a call from the originating mobile station MS' to the terminating mobile station MS, the HLR is contacted from the mobile station MS' via the gateway mobile switching center MSC'. The HLR knows the address of the MSC0 being responsible for the mobile station MS, but cannot contact MSC0 due to the outage of this server. Therefore, the HLR contacts in step 1 via the above-mentioned secondary link the standby mobile switching center MSC1 by sending a PRN request (PRN = Provide Roaming Number). The PRN request is a request for providing a temporary roaming number which identifies the mobile station MS as well as the mobile switching center where the mobile station MS is registered. This roaming number is at a later stage used by the gateway mobile switching center MSC' to re-direct the speech channel to the corresponding mobile switching center, where the terminating mobile station MS is registered.

Thereafter, the standby mobile switching center MSC1 pages in step 2 the mobile station MS. To do so, the mobile switching center MSC1 has to know the temporary mobile subscriber identity TMSI assigned to the mobile station MS and the Location area code LAC where the MS roams. The TMSI and the LAC of the paged mobile station are stored in a corresponding database MDB (MDB = Mobile Data Backup) assigned to MSC1. Each mobile switching center in the pool of mobile switching centers has such a database wherein each database includes information of all mobile stations being managed by the mobile switching centers of the pool. The MDB (Mobile Database Backup) is a part of the geographical redundancy functionality and also a part of the invention. The MDB will be filled during the normal operation from the MSC0 with the actual TMSI and location area of each subscriber registered in the MSC0 and a corresponding VLR. During the outage of MSC0 this data are used by the standby MSC for all subscribers, which are rerouted via the secondary SS7 link in case of the MSC1 works in the so called standby operation (MSC1). The new idea is now to bring forward the paging of the mobile station MS at that state of the terminating call flow before return the PRN with the required MSRN (Mobile Subscriber Roaming Number).

The MS responses in step 3 with the paging response message to the radio network controller RNC (in case of GSM to the base station controller BSC), which includes the TMSI. The RNC must route each message coming from the MS to the respective MSC of the MSC-pool, where the MS is registered. The TMSI of the MS was allocated by the outage MSC and therefore contains also a NRI (network resource indicator), which address the outage MSC. Due to the Network Resource Indicator (NRI) address of the outage MSC0, the RNC tries to route the response to the outage MSC. But because the outage MSC is not reachable the RNC/BSC selects one of the remaining MSCs inside of the MSC-pool. As the pool usually includes a great amount of mobile switching centers, the mobile station will in most cases not contact the mobile switching center from which the paging request was sent. In the example of Fig. 1, the mobile station contacts the random mobile switching center MSC2 by sending the page response including its TMSI to this mobile switching center.

Thereafter, the random mobile switching center MSC2 allocates a roaming number MSRN for the subscriber of a mobile station MS, said roaming number identifying the random mobile switching center MSC2 and the mobile station MS. The MSC2 does not know the TMSI (because not allocated by MSC2) and therefore can not assign the TMSI to the respective subscriber. The mobile standard has foreseen to retrieve the IMSI (Identification Mobile Subscriber Number from the previous MSC/VLR), where the MS has been registered before. As the MSC2 knows the TMSI due to the received page response, it can retrieve the previous visitor location register VLR of the mobile switching center MSC0, where the mobile station MS was registered before. This information can be derived from the NRI out of the TMSI of the mobile station MS transmitted to the mobile switching center MSC2 via the page response in step 3. The mobile switching center MSC2 then tries to send the standard message Identification Request to the VLR address of the mobile switching center MSC0. The new idea is that additional with the Identity request also the roaming number MSRN will be send to the previous MSC/VLR. However, as mentioned before, MSC0 is out of service. Nevertheless, due to the redundancy feature provided by the mobile switching center pool, there exists a further secondary SCCP link between the random mobile switching center MSC2 and the standby mobile switching center MSC1 substituting the missing primary link between the random mobile switching center MSC2 and the mobile switching center MSC0 out of service. Therefore, the roaming number MSRN is sent in step 4 to the mobile switching center MSC1 via the secondary link.

After receiving the roaming number MSRN, the standby mobile switching center MSC1 transmits in step 5 an acknowledgement message PRN_ACK including the MSRN of the MSC2 to the HLR. The MSRN is then transmitted to the gateway mobile switching center MSC'. Furthermore, in step 6, the international mobile subscriber identity IMSI which is stored in the database MDB is sent from the mobile switching center MSC1 to the mobile switching center MSC2. This IMSI is thereafter used by the mobile switching center MSC2 to perform a location update with the home location register HLR in order to register the mobile station MS in the random mobile switching center MSC2. This location update is done by a well-known Security Vector Retrieval in step 7 and the corresponding update messages UPDATE LOC/ISD (UPDATE_LOC = update location; ISD = Insert Subscriber Data) in step 8 as described in GSM standard. Thereafter, the scenario in Fig. 1 corresponds to the situation in which the mobile station MS is re-registered in the MSC2 and wherein the roaming number MSRN identifying the mobile station MSC2 is notified to the gateway MSC'. Therefore, the normal process for establishing a call can be performed by sending an initial address message IAM in step 9 to MSC2 and establishing the mobile terminated call MTC in step 10 via the radio access network RAN.

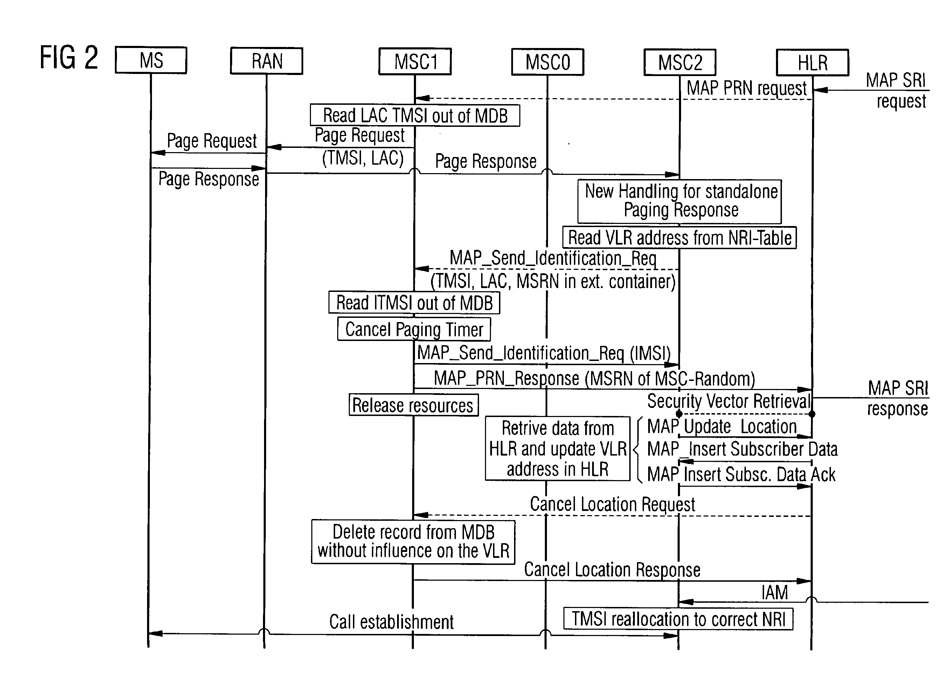

Fig. 2 shows a flow chart describing in detail the messages exchanged during the call signalling as explained with respect to Fig. 1. The messages transmitted via links substituting links out of service due to the outage of MSC0 are accompanied by broken lines.

At the beginning of the signalling process, a MAP SRI (Send Routing Information Request) request is sent from the gateway mobile switching center MSC' to the home location register HLR. MAP refers to the mobile application protocol which is a well-known protocol in mobile communication networks.

Thereafter, the HLR sends a MAP PRN request to the standby mobile switching center MSC1. Then, the local area code LAC and the TMSI of the terminating mobile station MS is read out of the database MDB and a Page Request including the TMSI and the LAC is received via the radio network RAN by the mobile station MS. The mobile station MS answers with a Page Response being forwarded to the random mobile switching center MSC2 as already described with respect to Fig. 1. Thereafter, the new handling for this stand-alone paging response according to the invention is established. To do so, the VLR address of the outage mobile switching center MSC0 is read from the so-called NRI-Table by using the NRI (NRI = Network Resource Identifier) inside the TMSI. The random mobile switching center MSC2 allocates a roaming number MSRN for the mobile station MS and sends this roaming number in a proprietary extension container via the message MAP_Send_Identification_Req to the standby mobile switching center MSC1. This message is originally addressed to the VLR of the outage mobile switching center MSC0. However, as this mobile switching center is not reachable, the message is sent via the above mentioned secondary SCCP route on SS7 level to the standby mobile switching center MSC1.

The mobile switching center MSC1 reads the IMSI of the mobile station MS out of the database MDB and also cancels the paging timer which has been started when the page request was sent by the standby mobile switching center MSC1. The IMSI is sent by the message MAP_Send_Identification_Req to the random mobile switching center MSC2. This IMSI will be used for the location update later on. Furthermore, the mobile switching center MSC1 transmits a MAP PRN response including the roaming number MSRN of the random mobile switching center MSC2 to the HLR which forwards the MSRN via the message MAP SRI response to the gateway mobile switching center MSC'. Furthermore, the standby MSC1 will release the resources without having registered the mobile station MS in the visitor location register VLR.

Thereafter, the rest of the call establishment is done via the random mobile switching center MSC2. When this server receives the IMSI of the called mobile station MS via the message MAP_Send_Identification_Req, it is able to retrieve the security vectors and performs a MAP Update Location towards the home location register HLR with the new VLR address. The HLR will be updated by the correct VLR address of the random mobile switching center MSC2 and it will send the subscriber data towards the new VLR. Up to now the subscriber is registered to the new random mobile switching center MSC2.

Thereafter, a Cancel Location Request is sent from the HLR via the secondary SCCP link to the standby mobile switching center MSC1 which deletes the record of the outage MSC0 from the database MDB without influencing the VLR data. Thereafter, a success message in the form of a Cancel Location Response is sent to the home location register HLR. Eventually, the initial address message IAM is received by the random mobile switching center MSC2. Now the call establishment towards the mobile station MS can be executed and during this activity also a TMSI reallocation is performed. This reallocation is necessary because the NRI inside the TMSI has changed from the outage mobile switching center MSC0 to the random mobile switching center MSC2.

There is a short time delay during which the home location register HLR is updated with the new VLR address of MSC2. As a consequence, an additional synchronization mechanism is implemented between receiving the initial address message IAM and having restored the subscriber data from the HLR in order to avoid that a call establishment is performed by the IAM before the subscriber data are available in the random mobile switching center MSC2. Therefore, the call establishment requested by the IAM is delayed until all subscriber data are received from the home location register HLR in a random mobile switching center MSC2.

### List of Reference Numerals

- MSC0: Mobile Switching Center out of service
- MSC1: Standby Mobile Switching Center
- MSC2: Random Mobile Switching Center
- MSC': Gateway Mobile Switching Center
- MDB: Database
- RAN: Random Access Network
- MS: Terminating Mobile Station
- MS': Originating Node
- HLR: Home Location Register
- C1, C2: Crosses

## Claims

1. A method for signalling a call to a terminating mobile station (MS) in a mobile communication network, wherein a mobile switching center (MSC0) assigned to the terminating mobile station (MS) is out of service and substituted by a standby mobile switching center (MSC1) which belongs to a pool of mobile switching centers, the method comprising the steps of:
a) a home location register (HLR) comprising subscriber data of the terminating mobile station (MS) is contacted by an originating node (MS')of the call via a gateway mobile switching center (MSC') and a request for providing a roaming number identifying the mobile switching center (MSC0) assigned to the terminating mobile station (MS) is sent to the standby mobile switching center (MSC1);
b) upon receipt of the request for providing a roaming number, the standby mobile switching center (MSC1) transmits a paging request for paging the terminating mobile station (MS);
c) the terminating mobile station (MS) transmits a paging response which is routed to a random mobile switching center (MSC2) out of the pool of mobile switching centers;
d) the random mobile switching center (MSC2) sends a roaming number (MSRN) identifying the random mobile switching center (MSC2) to the standby mobile switching center (MSC1);
e) the standby mobile switching center (MSC1) sends the roaming number (MSRN) identifying the random mobile switching center (MSC2) to the home location register (HLR) which sends the roaming number (MSRN) to the gateway mobile switching center (MSC');
f) the random mobile switching center (MSC2) is assigned to the terminating mobile station (MS);
g) by using the roaming number (MSRN) identifying the random mobile switching center (MSC2), a call is established towards the terminating mobile station (MS).

2. The method according to claim 1, wherein in step a) the request for providing a roaming number is sent to the standby mobile switching center (MSC1) via a route substituting a link between the home location register (HLR) and the mobile switching center (MSC0) out of service, particularly via a secondary SCCP route in the SS7 protocol.

3. The method according to claim 1 or 2, wherein in step b) a temporary identity of the terminating mobile station (MS) is read from a database (MDB) storing backup data from the mobile switching center (MSC0) out of service and being located in or assigned to the standby mobile switching center (MSC1), the temporary identity being used for paging the terminating mobile station (MS).

4. The method according to claim 3, wherein each mobile switching center of the pool of mobile switching centers includes a database (MDB) wherein the database of a respective mobile switching center (MSC1) comprises information of all mobile stations managed by another mobile switching center (MSC0) than the respective mobile switching center (MSC1) within the pool, particularly the information about the temporary identity of each mobile station managed by said another mobile switching center (MSC0), wherein said another mobile switching center (MSC0) is a mobile switching center being substituted by the respective mobile switching center (MSC1) in case of an outage of said another mobile switching center (MSC0).

5. The method according to claim 3 or 4, wherein the temporary identity includes a temporary mobile subscriber identity (TMSI) assigned to the terminating mobile station (MS) by a visitor location register of the mobile switching center (MSC0) out of service.

6. The method according to claim 5, wherein a location area code (LAC) is assigned to the temporary identity and is stored in said database, said location area code (LAC) indicating the location of the terminating mobile station (MS) within a radio access network (RAN) of the mobile communication network.

7. The method according to one of claims 3 to 6, wherein the paging response sent in step c) to the random mobile switching center (MSC2) includes the temporary identity of the terminating mobile station (MS) and wherein the random mobile switching center (MSC2) retrieves from the temporary identity an identifier for the mobile switching center (MSC0) out of service, particularly the address of a visitor location register of the mobile switching center (MSC0) out of service, whereupon in step d) by the use of the identifier for the mobile switching center (MSC0) out of service the roaming number (MSRN) identifying the random mobile switching center (MSC2) is sent to the standby mobile switching center (MSC1) via a route substituting a link between the random mobile switching center (MSC2) and the mobile switching center (MSC0) out of service, particularly via a secondary SCCP route in the SS7 protocol.

8. The method according to one of the preceding claims, wherein in step d) the roaming number (MSRN) identifying the random mobile switching center (MSC2) is sent to the standby mobile switching center (MSC1) within an extension container in an identification message, particularly in the MAP_SEND_IDENTIFICATION_REQUEST message of the MAP protocol.

9. The method according to one of the preceding claims, wherein in step d), upon receipt of the roaming number (MSRN) identifying the random mobile switching center (MSC2) on the standby mobile switching center (MSC1), an identity of the terminating mobile station (MS), particularly an international mobile subscriber identity (IMSI), is sent from the standby mobile switching center (MSC1) to the random mobile switching center (MSC2) in order to be used when performing step f).

10. The method according to claim 9 when depending on one of claims 3 to 6, wherein the identity of the terminating mobile station (MS) is stored in the database (MDB) in or assigned to the standby mobile switching center (MSC1).

11. The method according to one of the preceding claims, wherein in step f) a security vector retrieval and a location update is performed between the home location register (HLR) and the random mobile switching center (MSC2).

12. The method according to one of the preceding claims, wherein the method is performed in a UMTS and/or GSM network.

13. A mobile communication network, wherein a mobile switching center (MSC0) assigned to the terminating mobile station (MS) is out of service and substituted by a standby mobile switching center (MSC1) which belongs to a pool of mobile switching centers, the communication network being designed for signalling a call to a terminating mobile station (MS) by performing the following steps:
a) a home location register (HLR) comprising subscriber data of the terminating mobile station (MS) is contacted by an originating node (MS')of the call via a gateway switching center (MSC') and a request for providing a roaming number identifying the mobile switching center (MSC0) assigned to the terminating mobile station (MS) is sent to the standby mobile switching center (MSC1);
b) upon receipt of the request for providing a roaming number, the standby mobile switching center (MSC1) transmits a paging request for paging the terminating mobile station (MS);
c) the terminating mobile station (MS) transmits a paging response which is routed to a random mobile switching center (MSC2) out of the pool of mobile switching centers;
d) the random mobile switching center (MSC2) sends a roaming number (MSRN) identifying the random mobile switching center (MSC2) to the standby mobile switching center (MSC1) ;
e) the standby mobile switching center (MSC1) sends the roaming number (MSRN) identifying the random mobile switching center (MSC2) to the home location register (HLR) which sends the roaming number (MSRN) to the gateway mobile switching center (MSC');
f) the random mobile switching center (MSC2) is assigned to the terminating mobile station (MS);
g) by using the roaming number (MSRN) identifying the random mobile switching center (MSC2), a call is established towards the terminating mobile station (MS).

14. The network according to claim 13, wherein the network is designed for performing a method according to one of claims 2 to 12.
